(19) Europäisches Patentamt
European Patent Office
Office européen des brevets

(11) Numéro de publication : **0 060 368**
**B1**

(12) # FASCICULE DE BREVET EUROPÉEN

(45) Date de publication du fascicule du brevet : **26.06.85**

(51) Int. Cl.[4] : **C 08 L 83/04**

(21) Numéro de dépôt : **81402012.9**

(22) Date de dépôt : **16.12.81**

(54) **Compositions organopolysiloxaniques pâteuses durcissant à chaud en élastomères.**

(30) Priorité : **07.01.81 FR 8100115**

(43) Date de publication de la demande : **22.09.82 Bulletin 82/38**

(45) Mention de la délivrance du brevet : **26.06.85 Bulletin 85/26**

(84) Etats contractants désignés : **DE NL SE**

(56) Documents cités :
**DE-B- 1 935 963**
**DE-B- 2 929 587**
**FR-A- 1 182 347**
**FR-A- 1 193 721**

(73) Titulaire : **RHONE-POULENC SPECIALITES CHIMIQUES**
**"Les Miroirs" 18, Avenue d'Alsace**
**F-92400 Courbevoie (FR)**

(72) Inventeur : **Bouverot, Noël**
**rue de Chassagne Ternay**
**F-69360 Saint-Symphorien d'Ozon (FR)**
Inventeur : **Médard, Paul**
**5, rue François Jomard**
**F-69600 Oullins (FR)**
Inventeur : **Viale, Alain**
**62, rue Gabriel Péri**
**F-69200 Venissieux (FR)**

(74) Mandataire : **Chichery, Guy et al**
**RHONE-POULENC RECHERCHES Service Brevets Chimie et Polymères Centre de Recherches de Saint-Fons B.P. 62**
**F-69192 St-Fons Cedex (FR)**

**EP 0 060 368 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

**Description**

La présente invention a pour objet des compositions organopolysiloxaniques pâteuses, transvasables au moyen de pompes, renfermant comme agents de réticulation des peroxydes organiques, durcissant à chaud en élastomères possédant de bonnes propriétés mécaniques.

Des compositions organopolysiloxaniques pâteuses constituées d'huiles diorganopolysiloxaniques, de charges et de peroxydes organiques, durcissant à chaud en élastomères, sont décrites dans le brevet américain 3 791 998. L'objectif recherché dans ce brevet est d'obtenir, d'une façon simple, une bonne adhérence d'élastomères organopolysiloxaniques à des tissus qui seront utilisés comme isolants de conducteurs électriques ; cet objectif est réalisé par l'emploi de compositions suffisamment plastiques pour pénétrer entre les mailles des tissus. Ainsi ce brevet n'enseigne pas les moyens d'obtenir, à partir de compositions organopolysiloxaniques pâteuses, des élastomères possédant de bonnes propriétés mécaniques.

Des compositions organopolysiloxaniques pouvant avoir une viscosité assez faible pour circuler, puis durcir en élastomères, dans des dispositifs de moulage basses pressions (tels que des dispositifs de moulages par injection dite liquide) sont décrites dans le brevet américain 4 173 560. Elles sont constituées d'huiles diorganopolysiloxaniques ayant, par mole, environ 2 radicaux vinyles liés aux atomes de silicium, de silices finement divisées traitées par des amidoorganopolysiloxanes vinylés et, comme agents de réticulation, de peroxydes organiques ou de systèmes plus complexes comprenant des associations organohydrogénopolysiloxanes-dérivés du platine.

Elles durcissent en élastomères ayant des propriétés mécaniques correctes ; cependant le traitement des silices finement divisées met en œuvre des composés organopolysiloxaniques peu accessibles sur le marché des silicones ; en outre les exemples du brevet montrent que pour suivre ce traitement il faut tout d'abord sécher longuement les silices finement divisées et opérer ensuite en milieu solvant anhydre.

Le brevet américain 4 173 560 enseigne encore (colonne 7, exemple 1A et colonne 8, exemple 3) que le traitement habituel des silices au moyen de composés organosiliciques donneurs de groupes $(CH_3)_3SiO_{0,5}$, tels que l'hexaméthyldisilazane, conduit à des élastomères possédant des propriétés mécaniques plutôt inférieures (notamment sur le plan de la dureté Shore A) à celles des élastomères issus des compositions renfermant les silices traitées par les amidoorganopolysiloxanes vinylés.

La présente invention propose d'autres compositions organopolysiloxaniques pâteuses, utilisant des silices finement divisées non traitées, ou en partie traitées par des composés organosiliciques, d'accès facile sur le marché des silicones, durcissant à chaud en élastomères possédant de bonnes propriétés mécaniques.

Ces compositions pâteuses, ayant une pénétration s'étalant de 80 à 400, (mesurée selon la norme NF T 60-132), sont formées par mélange de (les parties et les pourcentages sont exprimés en poids) :

A. 100 parties d'huiles diorganopolysiloxaniques de viscosité 500 à 300 000 mPa.s à 25 °C, constituées essentiellement d'une succession de motifs de formule $R_2SiO$ et bloquées à chaque extrémité de leur chaîne par des motifs de formule $R_2R'SiO_{0,5}$, dans lesquelles les symboles R, identiques ou différents, représentent des radicaux hydrocarbonés, substitués ou non par des atomes d'halogènes, des groupes cyano, ayant de 1 à 8 atomes de carbone, le symbole R' a la signification des symboles R ou représente un radical hydroxyle, alcoxyle ayant de 1 à 4 atomes de carbone, β-méthoxyethoxyle.

B. 7 à 85 parties de silices renforçantes finement divisées, de surface spécifique d'au moins 50 $m^2/g$.

C. 1 à 20 parties d'agents antistructures.

D. 0,1 à 4 parties d'agents de réticulation à base de peroxydes organiques.

Elles sont caractérisées en ce que les silices renforçantes B, comprennent de 55 à 95 % de silices de précipitation et de 45 à 5 % de silices de combustion, ces silices étant non traitées ou traitées (mais dans la proportion d'au plus 60 %, de préférence d'au plus 55 %) par des composés organosiliciques fabriqués industriellement, apportant des motifs choisis parmi ceux de formules $(CH_3)_2SiO$, $(CH_3)$ $(CH_2 = CH)SiO$, $(CH_3)_3SiO_{0,5}$, $(CH_3)_2(CH_2 = CH)$ $SiO_{0,5}$.

Les huiles diorganopolysiloxaniques A, de viscosité 500 à 300 000 mPa.s à 25 °C, de préférence 800 à 250 000 mPa.s à 25 °C, sont des polymères linéaires constitués essentiellement des motifs précités de formules $R_2SiO$ et $R_2R'SiO_{0,5}$ ; il n'est cependant pas exclu qu'elles renferment de faibles quantités, représentant au plus 1 % en nombre, de motifs de formules $RSiO_{1,5}$ et/ou $SiO_2$.

Les radicaux hydrocarbonés, substitués ou non par des atomes d'halogènes, des groupes cyano, ayant de 1 à 8 atomes de carbone, représentés par les symboles R, englobent :

— les radicaux alcoyles et halogénoalcoyles ayant de 1 à 3 atomes de carbone tels que les radicaux méthyles, éthyles, propyles, isopropyles, trifluoro-3,3,3 propyles,

— les radicaux alcényles ayant de 2 à 4 atomes de carbone tels que les radicaux vinyles, allyles, butène-2 yles,

— les radicaux cycloalcoyles et halogénocycloalcoyles, ayant de 5 à 6 atomes de carbone nucléaire, tels que les radicaux cyclopentyles, cyclohexyles, méthylcyclohexyles, chlorocyclohexyles,

— les radicaux aryles et halogénoaryles mononucléaires, ayant de 6 à 8 atomes de carbone tels que les radicaux phényles, tolyles, xylyles, chlorophényles, dichlorophényles, trichlorophényles,

— les radicaux cyanoalcoyles dont les restes alcoyles ont de 2 à 3 atomes de carbone tels que les radicaux β-cyanoéthyles, γ-cyanopropyles.

Comme exemples concrets de radicaux alcoxyles, ayant de 1 à 4 atomes de carbone, représentés par les radicaux R', peuvent être cités les radicaux methoxyles, ethoxyles, n-propoxyles, isopropoxyles, n-butoxyles.

A titre illustratif de motifs constituant essentiellement les huiles diorganopolysiloxaniques A, peuvent être cités respectivement les motifs $(R)_2SiO$ de formules :

| | | |
|---|---|---|
| $(CH_3)_2SiO$, | $(CH_3)\ (CH_2=CH)SiO$ | |
| $CH_3(C_6H_5)SiO$, | $(C_6H_5)_2SiO$, | $C_6H_5(CH_2=CH)SiO$ |
| $CF_3CH_2CH_2(CH_3)SiO$, | $NC\text{-}CH_2CH_2(CH_3)SiO$, | $NC(CH_2)_3CH_3SiO$ |

et les motifs $(R)_2R'SiO_{0,5}$ de formule :

| | | |
|---|---|---|
| $(CH_3)_3SiO_{0,5}$, | $CH_2=CH(CH_3)_2SiO_{0,5}$, | $(CH_3)_2C_6H_5SiO_{0,5}$ |
| $CH_3(C_6H_5)\ (CH_2=CH)SiO_{0,5}$ | | |
| $HO(CH_3)_2SiO_{0,5}$, | $HO(CH_3)\ (CH_2=CH)SiO_{0,5}$ | |
| $CH_3O(CH_3)_2SiO_{0,5}$, | $CH_3CH_2O(CH_3)_2SiO_{0,5}$ | |
| $CH_3OCH_2CH_2O(CH_3)_2SiO_{0,5}$ | | |

Les huiles diorganopolysiloxaniques A sont commercialisées par les fabricants de silicones ; d'autre part elles peuvent être aisément fabriquées en suivant les techniques déjà connues. Ainsi l'une des plus courantes consiste à polymériser des diorganocyclopolysiloxanes à l'aide de quantités catalytiques d'agents alcalins ou acides. Au cours de cette polymérisation sont ajoutés :

1) (quand $R'=R$), des diorganopolysiloxanes de faible poids moléculaire de formule $R_3SiO(R_2SiO)_xSiR_3$
x ayant une valeur suffisante pour conduire à une viscosité s'étalant de 0,5 à 100 mPa.s à 25 °C

2) (quand $R'=OH$), de l'eau et/ou une huile de formule $HOR_2SiO(SiR_2O)_ySiR_2OH$
y ayant une valeur suffisante pour conduire à une viscosité s'étalant de 5 à 200 mPa.s à 25 °C

3) (quand $R'$ = alcoxyle ou $CH_3OCH_2CH_2O$), l'alcool correspondant R'H et/ou une huile de faible poids moléculaire de formule $R'R_2SiO(R_2SiO)_zSiR_2R'$
z ayant une valeur suffisante pour conduire à une viscosité s'étalant de 0,5 à 120 mPa.s à 25 °C.

Les polymères obtenus sont, de préférence, purifiés en éliminant, à une température en général supérieure à 70 °C et sous une pression en général inférieure à la pression atmosphérique, les composés de départ non transformés équilibrant la réaction de polymérisation ainsi que les polymères de faible poids moléculaire éventuellement formés lors de cette réaction. Il est recommandé, avant de distiller les produits volatils, de neutraliser les agents alcalins ou acides utilisés comme catalyseurs de polymérisation.

Les silices B sont utilisées à raison de 7 à 85 parties, de préférence 10 à 80 parties pour 100 parties des huiles diorganopolysiloxaniques A. Elles sont constituées de 2 types de silices :

(i) des silices de précipitation représentant 55 à 95 %, de préférence 60 à 90 % des silices B.

(2i) des silices de combustion représentant le complément à 100 %, soit 45 à 5 %, de préférence 40 à 10 %, des silices B.

Les proportions pondérales précitées des 2 types de silices caractérisent les compositions conformes à l'invention. Elles contribuent pleinement d'une part à obtenir la pénétration désirée s'étalant de 80 à 400 et d'autre part à donner aux élastomères, issus des compositions, de bonnes propriétés mécaniques.

Les silices de précipitation et de combustion utilisées sont celles commercialisées par les fabricants de charges minérales ; elles ont une surface spécifique (mesurée selon la méthode BET), d'au moins 50 $m^2/g$, de préférence supérieure à 80 $m^2/g$ et pouvant dépasser 350 $m^2/g$, une dimension moyenne des particules primaires inférieure à 80 nm et une densité apparente inférieure à 250 g/litre.

Elles diffèrent cependant par leur mode de fabrication. Les silices de précipitation découlent de l'acidification de solutions aqueuses de silicates alcalins et, contrairement aux silices de combustion, elles sont le plus souvent poreuses et possèdent un taux nettement plus important de groupes OH superficiels. Des détails sur leur procédé de préparation et leurs caractéristiques physiques figurent dans les brevets français 2 245 709, 2 356 596 et 2 395 952.

Les silices de combustion découlent de l'hydrolyse de chlorosilanes, plus particulièrement du tétrachlorosilane, à des températures supérieures à 800 °C, dans une flamme engendrant de la vapeur

d'eau obtenue par combustion dans l'air ou l'oxygène, d'hydrogène et/ou de composés hydrocarbonés. Des détails sur leurs procédés de préparation et leurs caractéristiques physiques figurent dans les brevets français 1 007 493, 1 074 265, 2 137 479.

Ces silices peuvent être utilisées telles quelles, ce qui est préférable étant donné que c'est la solution la moins coûteuse, ou bien après avoir été traitées par des composés organosiliciques habituellement employés pour cet usage et accessibles sur le marché des produits chimiques ; toutefois la totalité des charges utilisées n'est pas traitée mais au plus 60 %, de préférence 55 %. Les composés servant à traiter les charges sont représentés, par exemple, par des méthylpolysiloxanes tels que l'hexaméthyldisiloxane, l'octaméthylcyclotétrasiloxane, des méthylpolysilazanes tels que l'hexaméthyldisilazane, l'hexaméthylcyclotrisilazane, des chlorosilanes, tels que le diméthyldichlorosilane, le triméthylchlorosilane, le méthylvinyldichlorosilane, le diméthylvinylchlorosilane, des alcoxysilanes tels que le diméthyldimethoxysilane, le triméthylmethoxysilane, le triméthylethoxysilane, le diméthylvinylethoxysilane.

Lors de ce traitement les composés organosiliciques précités se fixent sur la zone superficielle des silices et/ou réagissent avec cette zone, en particulier avec les groupes hydroxyles qu'elle porte. Il en résulte un apport de motifs choisis dans le groupe constitué de ceux de formules $(CH_3)_2SiO$, $(CH_3)(CH_2=CH)SiO$, $(CH_3)_3SiO_{0,5}$, $(CH_3)_2(CH_2=CH)SiO_{0,5}$. Les silices traitées peuvent ainsi accroître leur poids de départ d'un pourcentage allant jusqu'à 20 %, en général jusqu'à 15 %.

Les agents antistructures C sont utilisés à raison de 1 à 20 parties, de préférence 2 à 15 parties, pour 100 parties des huiles diorganopolysiloxaniques A. Leur présence empêche les compositions de subir une évolution au cours du temps, laquelle évolution se traduit généralement par une diminution de la valeur des pénétrations.

Ils sont choisis le plus souvent parmi :

— les huiles diorganopolysiloxaniques de faibles viscosités, de l'ordre de 5 à 500 mPa.s à 25 °C, bloquées à chaque extrémité de leur chaîne par un radical hydroxyle et/ou un radical alcoxyle ayant de 1 à 3 atomes de carbone. Les radicaux organiques, liés aux atomes de silicium de ces huiles, sont, de préférence, des radicaux méthyles, éthyles, vinyles, phényles, trifluoro-3,3,3 propyles.

A titre d'exemples concrets de ces huiles peuvent être citées les huiles α, ω -dihydroxydiméthylpolysiloxaniques, α, ω-dihydroxyméthylphénylpolysiloxaniques, α, ω-diméthoxydiméthylpolysiloxaniques et α, ω-diméthoxyméthylphénylpolysiloxaniques, ayant de 3 à 12 % de radicaux hydroxyles ou méthoxyles.

— Le diphénysilanediol et les silanes de formules :

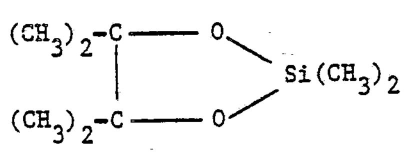
,
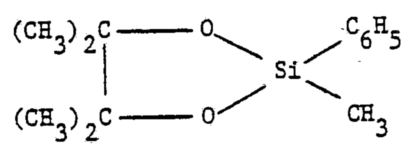

Les agents de réticulation D sont utilisés à raison de 0,1 à 4 parties, de préférence 0,15 à 3,5 parties, pour 100 parties des huiles diorganopolysiloxaniques. Ce sont des peroxydes organiques habituellement employés pour le durcissement des élastomères silicones vulcanisés à chaud. Ces peroxydes comportent plus spécialement le peroxyde de benzoyle, le peroxyde de dichloro-2,4 benzoyle, le peroxyde de dicumyle, le bis(t-butylperoxy)-2,5 diméthyl-2,5 hexane, le perbenzoate de t-butyle, le peroxyde de di-t-butyle, le peroxyde de cumyle et de t-butyle, le carbonate de t-butylperoxyde et d'isopropyle, le bis(t-butylperoxy)-1,1 triméthyl-3,3,5 cyclohexane, le peroxyde de cumyle et d'α, α-diméthyl p-méthylbenzyle, l'α, α'-bis(t-butylperoxy) diisopropylbenzène.

Ces peroxydes se décomposent à des températures et à des vitesses parfois différentes. Ils seront donc choisis en fonction de la technique de durcissement adoptée pour les compositions conformes à l'invention.

D'autres corps, en dehors des composés A, B, C et D, peuvent être introduits dans les compositions conformes à l'invention. Ainsi avec les silices finement divisées B peuvent être associées des charges minérales plus grossières dont le diamètre particulaire est supérieur à 0,1 µm. Ces charges sont représentées, par exemple, par le quartz broyé, les argiles calcinées, les silices de diatomées, le carbonate de calcium, les oxydes de fer, de titane, de magnésium, d'aluminium.

Elles sont introduites à raison d'au plus 120 parties, de préférence 100 parties, pour 100 parties des huiles diorganopolysiloxaniques A. Ces charges peuvent être utilisées telles quelles ou après avoir été traitées avec les composés organosiliciques déjà cités pour le traitement des silices finement divisées B.

En outre peuvent être introduits des pigments, des stabilisants thermiques (tels que les sels d'acides carboxyliques de fer, de manganèse), des agents retardant la combustion tels que des dérivés du platine.

Ces dérivés du platine (choisis généralement parmi l'acide chloroplatinique et les complexes ou les produits de réaction de cet acide ou d'autres chlorures du platine avec des dérivés organiques ou organosiliciques) sont de préférence associés avec des oxydes et hydroxydes de cérium, ou des oxydes de titane et de fer de combustion. De telles associations, et leur introduction dans les compositions organopolysiloxaniques durcissant à chaud en élastomères, sont décrites en particulier dans les brevets français 2 051 792, 2 166 313 et 2 203 846.

D'autres adjuvants peuvent encore être utilisés dans le dessein d'améliorer les propriétés mécaniques, l'adhérence à divers supports. Ces adjuvants englobent par exemple les silanes de formules ci-après, et leurs produits d'hydrolyse ou de cohydrolyse partielle :

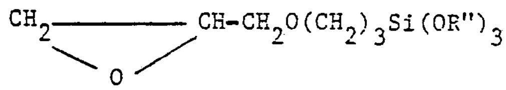

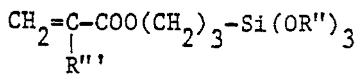 , $CH_2=CH-Si(OR")_3$

Les symboles R" représentent les radicaux méthyles, éthyles, n-propyles, β-methoxyéthyles ; le symbole R"' représente un atome d'hydrogène ou le radical méthyle.

A titre d'exemples concrets de ces silanes peuvent être cités ceux de formules :

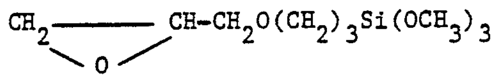

$CH_2=C(CH_3)COO(CH_2)_3Si(OCH_3)_3$

$CH_2=CHSi(OCH_2CH_2OCH_3)_3$

Ces adjuvants sont utilisés à raison de 0,05 à 5 parties, de préférence 0,1 à 4 parties, pour 100 parties des huiles diorganopolysiloxaniques A.

La préparation des compositions conformes à l'invention s'effectue par le mélange intime des divers constituants A, B, C et D et éventuellement des autres corps précités. Ce mélange a lieu dans les appareils appropriés utilisés par les fabricants de caoutchouc. Toutefois, étant donné le choix des constituants, il est beaucoup plus facile d'arriver à des mélanges homogènes avec des moyens moins puissants et pendant un temps plus court que pour la préparation de compositions organopolysiloxaniques usuelles renfermant, à la place des huiles A, des gommes diorganopolysiloxaniques.

En particulier les mélangeurs à cylindres ne sont pas utilisables, ce qui est un avantage puisqu'ils consomment du temps et de l'énergie. Par contre peuvent être employés des pétrins, ou des mélangeurs à fourreaux cylindriques équipés de vis, opérant en marche continue ou discontinue ; dans ces mélangeurs à fourreaux cylindriques les vis tournent et peuvent également être soumises à des mouvements de va-et-vient.

L'ordre d'introduction des divers constituants dans les appareils précités peut être quelconque. Néanmoins lorsque les mélanges des constituants sont chauffés à des températures supérieures à 60-80 °C, dans le dessein d'accélérer, par exemple, le mouillage des charges B par les huiles A (ce qui permet de réduire le temps d'occupation des appareils), il est alors nécessaire d.'ajouter les agents de réticulation D en dernier et seulement lorsque la température des mélanges est redescendue à un niveau convenable.

Les compositions obtenues sont des produits pâteux dont la valeur de la pénétration, mesurée selon la norme NF T 60-132, s'étale de 80 à 400, en général de 90 à 370. Elles sont donc aisément manipulables et en particulier peuvent être introduites dans les systèmes d'alimentation des presses à mouler, par simple pompage à l'aide de pompes, par exemple à piston. Elles peuvent être ensuite durcies en pièces de toutes formes et dimensions par les techniques de moulages traditionnelles telles que le moulage par transfert, par compression, par injection, étant entendu que le matériel de moulage employé n'a pas besoin d'être aussi lourd et coûteux que celui employé avec les compositions organopolysiloxaniques caoutchouteuses (ce matériel lourd et coûteux est décrit en particulier dans l'ouvrage de W. Lynch intitulé « Handbook of silicon rubber fabrication » pages 43 à 83) ; un matériel de moulage léger du type de celui utilisé avec les matières plastiques de basse et moyenne viscosité à l'état fondu, est suffisant. Les moules des presses, pendant l'opération de durcissement des compositions, sont en général portés à une température supérieure à 100 °C et inférieure à 250 °C.

Les propriétés mécaniques des élastomères issus des compositions de la présente invention sont bonnes, peu inférieures à celles des élastomères silicones usuels, vulcanisés à chaud. Ces propriétés varient évidemment selon, par exemple, le taux d'incorporation des charges B, mais pour des duretés Shore A allant de 40 à 80 on peut obtenir des résistances à la rupture allant de 6 à 8 MPa et même se situant au-dessus de ces valeurs.

Les exemples suivants illustrent l'invention :

Exemple 1

On charge dans un pétrin :

— 100 parties d'une huile α, ω-bis(diméthylvinylsiloxy) diméthylpolysiloxanique de viscosité 100 000 mPa.s à 25 °C
— 4 parties d'une huile α, ω-dihydroxydiméthylpolysiloxanique de viscosité 50 mPa.s à 25 °C
— 10 parties d'une silice de combustion de surface spécifique BET 200 $m^2/g$, de diamètre moyen des particules primaires 21 nm, de densité apparente 50 g/l
— 35 parties d'une silice de précipitation de surface spécifique BET 170 $m^2/g$ de densité apparente 70 g/l, de diamètre moyen des particules primaires 18 nm.

Le mélange, soumis à un malaxage efficace, est chauffé progressivement jusqu'à 150 °C ; il est ensuite malaxé à cette température pendant 1 heure. Après refroidissement vers 30 °C, on ajoute au mélange 2,25 parties d'une pâte formée par dispersion de 50 parties du peroxyde de dichloro-2,4 benzoyle dans 50 parties d'une huile α, ω-bis (triméthylsiloxy)diméthylpolysiloxanique de viscosité 1 000 mPa.s à 25 °C.

La composition obtenue, nommée $P_1$, a une pénétration mesurée selon la norme NF T 60-132 (correspondant à la norme ASTM D 217-68) de 190. On durcit cette composition $P_1$ en plaques d'élastomères de 2 mm d'épaisseur par chauffage, dans un moule, pendant 8 minutes à 115 °C, sous une pression de 50 bars. Un lot de ces plaques est chauffé pendant 4 heures à 200 °C, à l'air ambiant dans une étuve ventilée ; un autre lot est chauffé dans les mêmes conditions pendant 10 jours à 200 °C.

On mesure, sur ces plaques, par prélèvements d'échantillons normalisés, les propriétés suivantes :

Dureté Shore A selon la norme ASTM D 2240
Résistance à la rupture en MPa selon la norme AFNOR T 46-002 (correspondant à la norme ASTM D 412)
Allongement à la rupture en % selon la norme précédente.

Les résultats des mesures sont les suivants (les chiffres situés à gauche concernent les plaques chauffées pendant 4 heures à 200 °C, les chiffres situés à droite, entre parenthèses, concernent les plaques chauffées pendant 10 jours à 200 °C) :

| | | |
|---|---|---|
| Dureté Shore | 56 | 58 |
| Résistance à la rupture | 7,5 MPa | (6,7MPa) |
| Allongement à la rupture | 510 % | (390 %) |

A titre comparatif on fabrique la composition organopolysiloxanique décrite à l'exemple 1 du brevet américain 3 791 998. Cette composition est ensuite durcie en plaques de 2 mm en suivant la technique mise en œuvre pour durcir la composition $P_1$ ; un lot des plaques est chauffé pendant 4 heures à 200 °C à l'air ambiant et un autre lot pendant 10 jours à 200 °C à l'air ambiant. Les propriétés mécaniques mesurés sur ces plaques d'élastomères, sont les suivantes (seules figurent les mesures faites sur les plaques chauffées 4 heures à 200 °C, les plaques chauffées 10 jours à 200 °C n'ont pas de propriétés mesurables) :

| | |
|---|---|
| Dureté Shore A | 35 |
| Résistance à la rupture | 0,9 MPa |
| Allongement à la rupture | 160 % |

Ces valeurs sont très nettement inférieures à celles mesurées sur les plaques d'élastomères issues de la composition $P_1$. Des élastomères ayant des propriétés mécaniques aussi faibles ne peuvent être utilisés seuls, ils doivent être supportés par des matériaux tenaces.

Exemple 2

10 autres compositions $P_2$ à $P_{11}$ sont préparées selon le mode de fabrication, décrit à l'exemple 1, de la composition $P_1$.

Toutefois, des modifications sont apportées concernant la quantité pondérale ou la nature des constituants utilisés pour préparer la composition $P_1$. Ces modifications, et aussi l'addition d'autres constituants, sont indiquées ci-après :

Composition $P_2$

Les 100 parties de l'huile α, ω-bis(diméthylvinylsiloxy)diméthylpolysiloxanique de viscosité 100 000 mPa.s à 25 °C sont remplacées par 100 parties d'une huile semblable mais de viscosité 50 000 mPa.s à 25 °C.

Composition $P_3$

Les 100 parties de l'huile α, ω-bis(diméthylvinylsiloxy)diméthylpolysiloxanique de viscosité 100 000 mPa.s à 25 °C sont remplacées par 100 parties d'une huile semblable mais de viscosité 14 000 mPa.s à 25 °C.

Composition $P_4$

Les 100 parties de l'huile α, ω-bis(diméthylvinylsiloxy)diméthylpolysiloxanique de viscosité 100 000 mPa.s à 25 °C sont remplacées par 100 parties d'une huile α, ω-bis(triméthylsiloxy) diorganopolysiloxanique de viscosité 100 000 mPa.s à 25 °C dont la chaîne diorganopolysiloxanique est formée de motifs $(CH_3)SiO$ et $CH_3(CH_2=CH)SiO$, les radicaux vinyles représentant 0,020 % du poids de l'huile.

Composition $P_5$

Les 35 parties de la silice de précipitation de surface spécifique BET 170 $m^2/g$, sont remplacées par 25 parties de la même silice.

Composition $P_6$

Les 35 parties de la silice de précipitation, de surface spécifique BET 170 $m^2/g$, sont remplacées par 15 parties de la même silice.

Composition $P_7$

Les 35 parties de la silice de précipitation, de surface spécifique BET 170 $m^2/g$, sont remplacées par 40 parties de la même silice ; en outre est ajoutée 0,5 partie du silane de formule $CH_2=C(CH_3)COO(CH_2)_3Si(OCH_3)_3$.

Composition $P_8$

10 parties de quartz broyé de diamètre particulaire moyen 5 microns, de surface spécifique BET 7 $m^2/g$, sont ajoutées aux constituants de $P_1$.

Composition $P_9$

50 parties de quartz broyé de diamètre particulaire moyen 5 microns, de surface spécifique BET 7 $m^2/g$, sont ajoutées aux constituants de $P_1$.

Composition $P_{10}$

50 parties de quartz broyé de diamètre particulaire moyen 5 microns, de surface spécifique BET 7 $m^2/g$, et 0,5 partie du silane de formule $CH_2=C(CH_3)COO(CH_2)_3Si(OCH_3)_3$ sont ajoutées aux constituants de $P_1$.

Composition $P_{11}$

Les 35 parties de la silice de précipitation de surface spécifique BET 170 $m^2/g$, sont remplacées par 8 parties de la même silice ; en outre sont ajoutées 7 parties d'une silice de combustion de surface spécifique 300 $m^2/g$ traitée par de l'octaméthylcyclotétrasiloxane.

On mesure les pénétrations des compositions ainsi que les propriétés mécaniques des élastomères issus du durcissement de ces compositions. Les techniques de mesures et le procédé de durcissement sont ceux décrits à l'exemple 1, les plaques d'élastomères sont seulement chauffées 4 heures à 200 °C à l'air ambiant.

Les résultats sont les suivants :

(Siehe Tabelle Seite 8 f.)

Tabelle

| | PENETRATION | DURETE SHORE A | RESISTANCE A LA RUPTURE EN MPa | ALLONGEMENT A RUPTURE EN % |
|---|---|---|---|---|
| $P_2$ | 185 | 57 | 7,5 | 350 |
| $P_3$ | 180 | 58 | 6,3 | 280 |
| $P_4$ | 175 | 55 | 6,2 | 320 |
| $P_5$ | 210 | 50 | 7,1 | 500 |
| $P_6$ | 270 | 43 | 5,5 | 520 |
| $P_7$ | 140 | 68 | 7,5 | 270 |
| $P_8$ | 175 | 58 | 7,6 | 340 |
| $P_9$ | 150 | 66 | 7,2 | 240 |
| $P_{10}$ | 130 | 73 | 8,1 | 170 |
| $P_{11}$ | 240 | 40 | 6,1 | 570 |

**Revendications**

1. Compositions organopolysiloxaniques pâteuses, ayant une pénétration s'étalant de 80 à 400, formées par mélange de :

A. 100 parties d'huiles diorganopolysiloxaniques de viscosité 500 à 300 000 mPa.s à 25 °C, constituées essentiellement d'une succession de motifs de formule $R_2SiO$ et bloquées à chaque extrémité de leur chaîne par des motifs de formule $R_2R'SiO_{0,5}$, dans lesquelles les symboles R, identiques ou différents, représentent des radicaux hydrocarbonés, substitués ou non par des atomes d'halogènes, des groupes cyano, ayant de 1 à 8 atomes de carbone, le symbole R' a la signification des symboles R ou représente un radical hydroxyle, alcoxyle ayant de 1 à 4 atomes de carbone, β-méthoxyéthoxyle.

B. 7 à 85 parties de silices renforçantes finement divisées, de surface spécifique d'au moins 50 $m^2/g$.

C. 1 à 20 parties d'agents antistructures.

D. 0,1 à 4 parties d'agents de réticulation à base de peroxydes organiques,

caractérisées en ce que les silices renforçantes B comprennent de 55 à 95 % de silices de précipitation et de 45 à 5 % de silices de combustion.

2. Compositions selon la revendication 1, caractérisées en ce que les silices renforçantes comprennent de 60 à 90 % de silices de précipitation et de 40 à 10 % de silices de combustion.

3. Compositions selon l'une quelconque des revendications 1 et 2, caractérisées en ce qu'au plus 60 % des silices renforçantes B sont traitées par des composés organosiliciques apportant des motifs choisis parmi ceux de formules $(CH_3)_2SiO$, $CH_3(CH_2=CH)SiO$, $(CH_3)_3SiO_{0,5}$, $(CH_3)_2CH_2=CHSiO_{0,5}$.

4. Compositions selon la revendication 3, caractérisées en ce qu'au plus 55 % des silices renforçantes B sont traitées par des composés organosiliciques apportant des motifs choisis parmi ceux de formules $(CH_3)_2SiO$, $CH_3(CH_2=CH)SiO$, $(CH_3)_3SiO_{0,5}$, $(CH_3)_2CH_2=CHSiO_{0,5}$.

5. Compositions selon l'une quelconque des revendications 1 à 4 dans lesquelles sont ajoutés aux

constituants A, B, C et D, décrits à la revendication 1, d'autres constituants, utilisés à raison de 0,05 à 5 parties pour 100 parties des constituants A, choisis parmi :

— les silanes de formules :

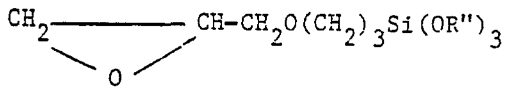

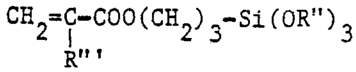 , $CH_2=CH-Si(OR'')_3$

dans lesquelles les symboles R" représentent des radicaux méthyles, éthyles, n-propyles, β-methoxyéthyles et le symbole R‴ représente un atome d'hydrogène ou le radical méthyle

— les produits d'hydrolyse partielle et de cohydrolyse partielle des silanes précédents.

6. Elastomères obtenus par le durcissement à chaud des compositions selon l'une quelconque des revendications 1 à 5.

**Claims**

1. Pasty organopolysiloxane compositions having a penetration ranging from 80 to 400, formed by mixing :

A. 100 parts of diorganopolysiloxane oils of viscosity 500 to 300 000 mPa.s at 25 °C, consisting principally of a succession of units of formula $R_2SiO$ and blocked at each end of their chain by units of formula $R_2R'SiO_{0,5}$, in which the symbols R' which may be identical or different, denote hydrocarbon radicals which may or may not be substituted by halogen atoms or cyano groups and which have 1 to 8 carbon atoms, the symbol R' has the same significance as the symbols R or denotes a hydroxyl radical, alkoxy radical having 1 to 4 carbon atoms or β-methoxyethoxy radical.

B. 7 to 85 parts of finely divided reinforcing silicas with a specific surface of at least 50 $m^2/g$.

C. 1 to 20 parts of anti-structure agents.

D. 0,1 to 4 parts of crosslinking agents based on organic peroxides,

characterised in that the reinforcing silicas B comprise 55 to 95 % precipitated silicas and 45 to 5 % pyrogenic silicas.

2. Compositions according to claim 1, characterised in that the reinforcing silicas comprise 60 to 90 % of precipitated silicas and 40 to 10 % of pyrogenic silicas.

3. Compositions according to either of claims 1 and 2, characterised in that at most 60 % of the reinforcing silicas B are treated with organosilicon compounds which provide units chosen from those of formulae $(CH_3)_2SiO$, $CH_3(CH_2=CH)SiO$, $(CH_3)_3SiO_{0,5}$, $(CH_3)_2=CH_2=CHSiO_{0,5}$.

4. Compositions according to claim 3 characterised in that at most 55 % of the reinforcing silicas B are treated with organosilicon compounds providing units chosen from those of formulae $(CH_3)_2SiO$, $CH_3(CH_2=CH)SiO$, $(CH_3)_3SiO_{0,5}$ and $(CH_3)_2CH_2=CHSiO_{0,5}$.

5. Compositions according to any one of claims 1 to 4, in which, to the constituents A, B, C and D described in claim 1, there are added other constituents, used in the proportion of 0,05 to 5 parts per 100 parts of the constituents A, chosen from :

— the silanes of formulae :

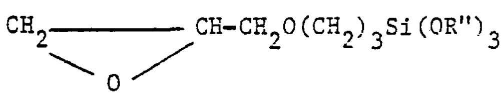

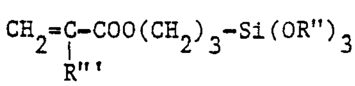 , $CH_2=CH-Si(OR'')_3$

in which the symbols R" denote methyl, ethyl, n-propyl and β-methoxyethyl radicals and the symbol R‴ denotes a hydrogen atom or methyl radical,

— the products of partial hydrolysis and partial cohydrolysis of the above silanes.

6. Elastomers obtained by heat setting the compositions according to any one of claims 1 to 5.

**Patentansprüche**

1. Pastöse Organopolysiloxanzusammensetzungen mit einer Durchdringung, die sich von 80 bis 400 erstreckt, gebildet durch Mischen von :

A. 100 Teilen Diorganopolysiloxanölen der Viskosität 500 bis 300 000 mPa.s bei 25 °C, die im wesentlichen aus einer Folge von Gruppierungen der Formel $R_2SiO$ bestehen und an jedem Ende ihrer Kette durch Gruppierungen der Formel $R_2R'SiO_{0,5}$ blockiert sind, worin die Symbole R, die identisch oder verschieden sind, Kohlenwasserstoffreste mit 1-8 Kohlenstoffatomen bedeuten, die substituiert sind oder nicht durch Halogenatome, cyanogruppen, das Symbol R' die Bedeutung der Symbole R hat oder einen Hydroxylrest, Alkoxyl mit 1-4 Kohlenstoffatomen, β-Methoxyethoxyl bedeutet,

B. 7-85 Teilen fein verteilten, verstärkenden Siliciumdioxiden mit einer spezifischen Oberfläche von wenigstens 50 m²/g,

C. 1-20 Teilen Antistrukturmitteln,

D. 0,1 bis 4 Teilen Vernetzungsmitteln auf Basis organischer Peroxide,

dadurch gekennzeichnet, daß die verstärkenden Siliciumdioxide B 55-95 % Fällungssiliciumdioxide und 45-5 % Verbrennungssiliciumdioxide enthalten.

2. Zusammensetzungen gemäß Anspruch 1, dadurch gekennzeichnet, daß die verstärkenden Siliciumdioxide 60-90 % Fällungssiliciumdioxide und 40-10 % Verbrennungssiliciumdioxide umfassen.

3. Zusammensetzungen gemäß einem der Ansprüche 1 und 2, dadurch gekennzeichnet, daß höchstens 60 % der verstärkenden Siliciumdioxide B mit Organosiliciumverbindungen behandelt sind, die Gruppierungen ausgewählt unter den Formeln $(CH_3)_2SiO$, $CH_3(CH_2=CH)SiO$, $(CH_3)_3SiO_{0,5}$, $(CH_3)_2CH_2=CHSiO_{0,5}$ tragen.

4. Zusammensetzungen gemäß Anspruch 3, dadurch gekennzeichnet, daß höchstens 55 % der verstärkenden Siliciumdioxide B mit Organosiliciumverbindungen behandelt sind, die Gruppierungen ausgewählt unter denjenigen der Formeln $(CH_3)_2SiO$, $CH_3(CH_2=CH)SiO$, $(CH_3)_3SiO_{0,5}$, $(CH_3)_2CH_2=CHSiO_{0,5}$ tragen.

5. Zusammensetzungen gemäß einem der Ansprüche 1 bis 4, dadurch gekennzeichnet, daß den Bestandteilen A, B, C und D, beschrieben in Anspruch 1, andere Bestandteile, verwendet in einer Menge von 0,05 bis 5 Teilen je 100 Teile der Bestandteile A, zugefügt sind, ausgewählt unter :

— den Silanen der Formeln :

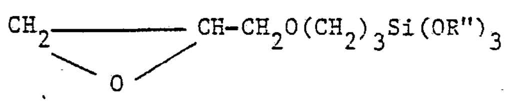

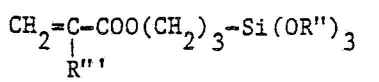 , $CH_2=CH-Si(OR'')_3$

worin die Symbole R" Methyl-, Ethyl-, n-Propyl-, β-Methoxyethylreste und das Symbol R"' ein Wasserstoffatom oder den Methylrest bedeutet,

— den Produkten der teilweisen Hydrolyse und teilweisen Cohydrolyse der vorstehenden Silane.

6. Elastomere erhalten durch Wärmehärten der Zusammensetzungen gemäß einem der Ansprüche 1 bis 5.